## Europäisches Patentamt
## European Patent Office
## Office européen des brevets

(19)

(11) Veröffentlichungsnummer: **0 163 602**
**B1**

(12) # EUROPÄISCHE PATENTSCHRIFT

(45) Veröffentlichungstag der Patentschrift:
**10.08.88**

(51) Int. Cl.⁴: **F 16 H 25/20**

(21) Anmeldenummer: **85810189.2**

(22) Anmeldetag: **26.04.85**

(54) Anordnung zum Verstärken der Antriebskraft eines Steuermotors bei einem linearen Stellantrieb.

(30) Priorität: **29.05.84 CH 2641/84**

(43) Veröffentlichungstag der Anmeldung:
**04.12.85 Patentblatt 85/49**

(45) Bekanntmachung des Hinweises auf die Patenterteilung:
**10.08.88 Patentblatt 88/32**

(84) Benannte Vertragsstaaten:
**AT DE FR GB IT NL SE**

(56) Entgegenhaltungen:
**FR-A-2 441 458**
**GB-A-2 159 638**
**US-A-3 020 705**
**US-A-3 083 592**

**ENERGIE FLUIDE, Nr. 101, März 1978, Seiten 43-45;**
**J. PERRUCHOT: "L'amplificateur linéaire électro-hydraulique"**

(73) Patentinhaber: **SIG Schweizerische Industrie-Gesellschaft, CH- 8212 Neuhausen am Rheinfall (CH)**

(72) Erfinder: **Hampejs, Karel, Badische Bahnstofstrasse 23, CH- 8212 Neuhausen am Rheinfall (CH)**

(74) Vertreter: **White, William, PATENTANWALTS-BUREAU ISLER AG Postfach 6940 Walchestrasse 23, CH- 8023 Zürich (CH)**

## Beschreibung

Die vorliegende Erfindung betrifft eine Anordnung zum Verstärken der Antriebskraft gemäß dem Oberbegriff des unabhängigen Patentanspruchs 1 bzw. 4.

Für verschiedene genaue translatorische Bewegungen beim Heben, Senken, Öffnen, Schließen, Neigen, Kippen, Stoßen, Ziehen, Schieben, Drücken, Verstellen, Dosieren, Steuern, Regeln und vielem mehr, ist es bekannt, lineare Fluidverstärker zu verwenden. Solche Fluidverstärker umfassen einen genauen Stellantrieb, ein Wegeventil zur Verstärkung der Verstellkraft mittels fluidischem Druck und eine Gewindespindel mit Spindelmutter, deren axiale Lage es zu verstellen gilt. Solche lineare Antriebe sind bekanntlich genau, aber sie sind teuer.

Auch sind sogenannte elektrische Verstellzylinder auf den Markt gekommen, bei denen die Motorwelle die Gewindespindel direkt oder über ein Getriebe antreibt. Solche Antriebe sind bedeutend billiger, aber die Motoren müssen größere Kräfte abgeben als beim obigen Beispiel.

Eine Anordnung der eingangs erwähnten Art ist beispielsweise aus der US-A- 3 383 592 bekannt. Diese Anordnung umfaßt eine Meßeinrichtung mit zwei Riemenscheiben und einem Zahnriemen, auf den sich ein federndes Rad stützt, das über einen Hebel einen umschalter betätigen kann, wobei die Meßeinrichtung zugleich als Kupplung zur Verbindung der Steuermotorwelle mit einer Gewindespindel dient.

Eine derartige Anordnung weist große Abmessungen im Hinblick auf die Meßeinrichtung auf, die sich außerhalb des Hohlzylinders befindet.

Es ist daher Aufgabe der Erfindung, eine solche Anordnung derart zu verbessern, daß zumindest einige Teile derselben raumsparend dimensioniert werden können.

Diese Aufgabe wird erfindungsgemäß durch eine eine sehr kleine Meßeinrichtung aufweisende Anordnung nach dem kennzeichnenden Teil des Anspruchs 1 bzw. durch eine einen relativ schmalen Hohlzylinder aufweisende Anordnung nach dem kennzeichnenden Teil des Anspruchs 4 gelöst.

Die abhängigen Patentansprüche definieren besonders vorteilhafte Ausführungsformen.

Ausführungsbeispiele der Erfindung werden nachfolgend anhand der Zeichnung erläutert. Es zeigt:

Fig. 1    eine erste Ausführungsform zum Teil als Schnittansicht mit schematisch angedeutetem Fluidverstärker,

Fig. 2    eine schematische Darstellung eines Zweiwegventils zur Ansteuerung des Fluidverstärkers in Fig. 1, ·

Fig. 3    eine Schnittansicht gemäß der Schnittlinie IV - IV in Fig. 1, und

Fig. 4    eine zweite Ausführungsform zum Teil als Schnittansicht mit einem Fluidmotor für die Leistungsverstärkung.

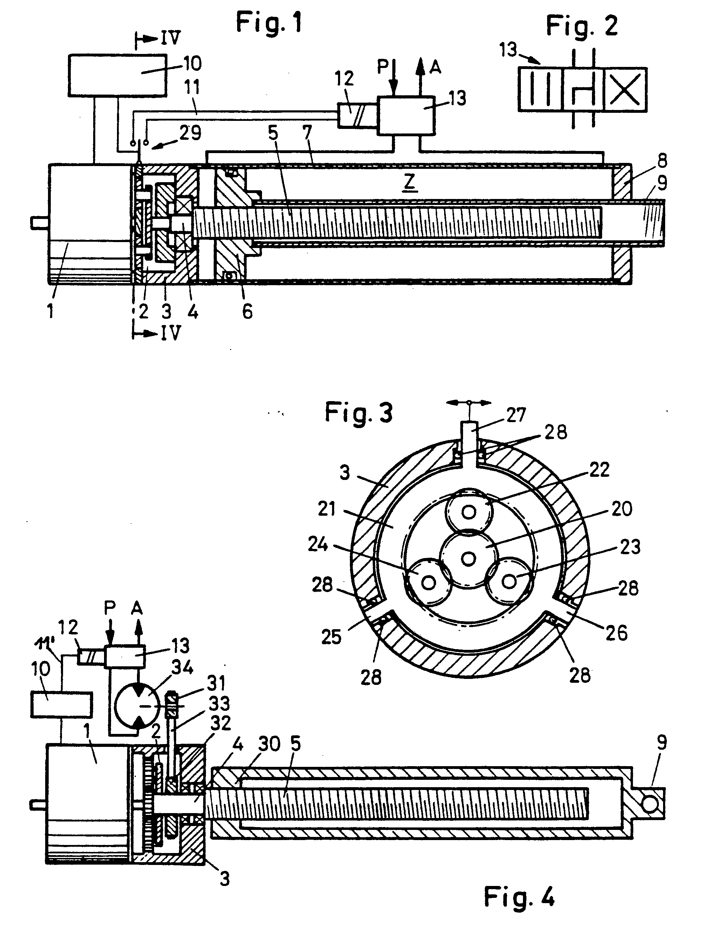

Gemäß Fig. 1 ist ein Schrittmotor 1 über ein Gehäuse 3 an einem Zylinder 7 mit einem Zylinderboden 8 angeflanscht. Im Gehäuse 3 befindet sich eine Kupplung 2 zur Verbindung der Motorwelle mit einer einstückig mit einer Gewindespindel 5 verbundenen Antriebswelle q. Auf die Gewindespindel 5 ist eine als zweiseitiger Kolben für den genannten Zylinder 7 ausgebildete Spindelmutter 6 aufgeschraubt. Mit dieser Spindelmutter 6 ist eine hohlzylindrische Schubstange 9 einstückig verbunden und diese Schubstange 9 durchdringt den Zylinderboden 8 als Kolbenstange der als Kolben ausgebildeten Spindelmutter 6.

In diesem Ausführungsbeispiel ist eine elektrische Steuerung 10 für den Schrittschaltmotor 1 über eine Leitung 11 mit einem Elektromagneten 12 zur Betätigung eines Zweiwegeventils 13 mit neutraler Mittelstellung verbunden. Ein solches Ventil 13 ist in Fig. 2 schematisch dargestellt und in der Fluidtechnik jedem Fachmann bekannt.

Von diesem Ventil 13 wird je eine Fluidleitung beidseits der Spindelmutter 6 in den Kolben 7 eingeführt. In der einen Endstellung gelangt damit Druckfluid aus einem Zufluß P in einen Zylinderraum Z und in der anderen Endstellung in den anderen Zylinderraum Z, während der jeweils andere Zylinderraum über das Ventil 13 mit dem Abfluß A verbunden ist. Damit kann durch ein einfaches Mittel eine gute Verstärkung der Motorkraft erhalten werden.

Die Steuerung des Elektromagneten 12 zur Betätigung des Wegeventils 13 erfolgt gemäß Fig. 3 durch Verdrehung eines gegen federnde Anschläge arbeitenden Getriebes. Dazu ist auf der Welle des Motors 1 ein zentrales Zahnrad 20 angeordnet. Dieses Zahnrad 20 kämmt mit drei planetenartig auf einen äußeren Ring 21 mit Innenverzahnung einwirkenden Zahnrädern 22, 23, 24. Dieser Ring 21 ist mit drei radialen Stiften 25, 26, 27 versehen, die je im Gehäuse, beispielsweise durch Gummieinlagen 28 federnd, in Mittelstellung gehalten sind.

Ein Stift 27 ist verlängert und überragt das Gehäuse 3. Mit diesem Stift kann ein elektrischer Umschalter 29 betätigt werden, um den Elektromagneten 12 entsprechend zu betätigen. Bei dieser Ausführungsform sind keine teueren Spezialbestandteile notwendig und trotzdem kann die genaue Einstellung durch einen Schrittmotor zur Einstellung der Schubstange 9 benützt werden.

Schließlich zeigt Fig. 4 ein Ausführungsbeispiel ohne die Ausbildung der Spindelmutter 30 als Kolben in einem Zylinder. Der Schrittmotor 1 treibt über eine Kupplung 2 in einem Gehäuse 3 die Gewindespindel 5 an. Die Spindelmutter 30 ist wieder mit der Schubstange 9 einstückig verbunden. Von einer elektrischen Steuerschaltung 10 wird ein Signal abgegeben, wenn die Leistungsaufnahme des Motors 1 eine bestimmte Schwelle überschreitet.

Mit einer Schwellwertschaltung wird die Stärke des Steuerstromes für den Schrittschaltmotor 1 mit wenigstens einem Referenzwert verglichen, und gibt bei Über- oder Unterschreiten dieses Referenzwertes eine Information auf eine Leitung 11' ab. Diese Leitung ist ebenfalls mit einem Elektromagneten 12 verbunden.

Auch hier wird wieder mittels des Elektromagneten 12 ein Wegeventil 13, z.B. gemäß Fig. 2 betätigt.

Zum Unterschied zu dem oben beschriebenen Beispielen gelangt aber hier das Druckfluid zu einem Fluidmotor 34, der über Riemenscheiben 31, 32 und einen Zahnriemen 33 eine zusätzliche Antriebskraft aufbringt, um die schwache Stellkraft des Schrittmotors zu unterstützen.

**Patentansprüche**

1. Anordnung zum Verstärken der Antriebskraft eines Steuermotors (1) bei einem linearen Stellantrieb mit einer Gewindespindel (5) und einer mit einer hohlzylindrisch ausgebildeten Schubstange (9) verbundenen Spindelmutter (6), die als zweiseitig wirkender Kolben in einem äußeren Zylinder (7) ausgebildet ist, wobei die Schubstange (9) einen Zylinderboden (8) als Kolbenstange durchstößt, und wobei eine Meßvorrichtung vorgesehen ist, die in Abhängigkeit eines federnden Anschlags (27) arbeitet, um über ein elektrisch gesteuertes Ventil (13) dem genannten Zylinder (7) Druckfluid zuzuführen, dadurch gekennzeichnet, daß ein den federnden Anschlag (27) aufweisendes, eine Drehmomentmessung bewirkendes Getriebe (20 - 28) vorhanden ist, das sich in einem Gehäuse (3) zwischen dem anderen Boden des Zylinders (7) und dem Motor (1) befindet.

2. Anordnung nach Anspruch 1, dadurch gekennzeichnet, daß auf der Welle des Motors (1) ein zentrales Zahnrad (20) angeordnet ist, das mit drei planetenartig auf einen äußeren Ring (21) mit Innenverzahnung einwirkenden Zahnrädern (22, 23, 24) kämmt, wobei der äußere Ring (21) mit drei radialen Stiften (25, 26, 27) versehen ist, die je im Gehäuse federnd in Mittelstellung gehalten sind.

3. Anordnung nach Anspruch 2, dadurch gekennzeichnet, dass mit einem der Stifte, der verlängert ist und das Gehäuse (3) überragt, ein elektrischer Umschalter (29) umschaltbar ist, um einen das Ventil (13) steuernden Elektromagneten (12) zu betätigen.

4. Anordnung zum Verstärken der Antriebskraft eines Steuermotors (1) bei einem linearen Stellantrieb mit einer Gewindespindel (5) und einer mit einer hohlzylindrisch ausgebildeten Schubstange (9) verbundenen Spindelmutter (30), ferner mit einer Meßvorrichtung und einem über die genannte Meßvorrichtung gesteuerten Ventil (13) zur Betätigung eines Fluidantriebes (34) und mit einer Wirkverbindung (31 - 33) zwischen Fluidantrieb (34) und Gewindespindel (5), dadurch gekennzeichnet, daß die Meßvorrichtung Mittel zur Messung des Steuermotorstroms und eine Steuerschaltung (10) mit einer Schwellwertschaltung umfaßt, daß als Fluidantrieb ein gesonderter Fluidmotor (34) benützt ist, und daß zur Übertragung der Antriebskraft auf die Gewindespindel (5) mechanische Antriebsmittel (31 - 33) vorhanden sind.

5. Anordnung nach Patentanspruch 4, dadurch gekennzeichnet, daß die Antriebsmittel eine erste Riemenscheibe (31) an der Welle des Fluidmotors (34), eine zweite Riemenscheibe (32) auf der Gewindespindel (5) und ein über beide Riemenscheiben (31, 32) gelegter Zahnriemen (33) umfassen.

6. Anordnung nach einem der Ansprüche 1 bis 5, dadurch gekennzeichnet, daß der Steuermotor (1) ein Schrittmotor ist.

**Claims**

1. An arrangement for reinforcing the driving force of a servomotor (1) in a linear actuator with a threaded spindle (5) and a spindle nut (6) which is connected to a hollow cylindrical connecting rod (9) and is constructed as a piston acting at both ends in the external cylinder (7), the connecting rod (9) penetrating a cylinder base (8) as piston rod and wherein there is provided a measuring device which operates as a function of a resilient stop means (27) in order to supply pressure fluid via an electrically controlled valve (13) to said cylinder (7), characterised in that there is provided a gear mechanism (20 - 28) which comprises the resilient stop means (27), measures the torque and is located in a housing (3) between the other base of the cylinder (7) and the motor (1).

2. An arrangement according to claim 1, characterised in that, on the shaft of the motor (1) there is arranged a central gear wheel (20) which meshes with three gear wheels (22, 23, 24) acting in planetary fashion upon an external ring (21) with internal teeth, the external ring (21) being provided with three radial pins (25, 26, 27) which are each held resiliently in the neutral position in the housing.

3. An arrangement according to claim 2, characterised in that an electric change-over switch (29) can be changed over with one of the pins which is extended and projects beyond the housing (3), in order to actuate an electromagnet (12) controlling the valve (13).

4. An arrangement for reinforcing the driving force of a servomotor (1) in a linear actuator with a threaded spindle (5) and a spindle nut (30) connected to a hollow cylindrical connecting rod (9), also with a measuring device and a valve (13) controlled by said measuring device for actuating a fluid drive means (34) and with a working

5          **0 163 602**          6

connection (31 - 33) between fluid the measuring device comprises means for measuring the servomotor current and a control circuit (10) with a threshold circuit, in that a separate fluid motor (34) is used as fluid drive means and in that mechanical driving means (31 - 33) are provided for transmitting the driving force to the threaded spindle (5).

5. An arrangement according to claim 4, characterised in that the driving means comprise a first pulley (31) on the shaft of the fluid motor (34), a second pulley (32) on the threaded spindle (5) and a toothed belt (33) placed over the two pulleys (31, 32).

6. An arrangement according to one of claims 1 to 5, characterised in that the servomotor (1) is a step-by-step motor.


## Revendications

1. Dispositif pour l'amplification de la force d'entraînenent d'un moteur de commande (1) dans une commande de positionnement linéaire comprenant une broche filetée (5) et un écrou de broche (6) qui est solidaire d'une bielle (9) de forme cylindrique creuse et qui est réalisé sous forme de piston à double effet dans un cylindre extérieur (7), la bielle (9) passant à travers un fond (8) du cylindre à la manière d'une tige de piston et un dispositif de mesure étant prévu et opérant, sous la dépendance d'une butée à ressort (27), pour envoyer un fluide sous pression dans ledit cylindre (7) au moyen d'une valve (13) commandée électriquement, caractérisé par la présence d'un jeu d'engrenages (20 - 28) qui comporte la butée à ressort (27) et qui effectue une mesure de couple de rotation, ce jeu d'engrenages se trouvant dans un boîtier (3) entre l'autre fond du cylindre (7) et le moteur (1).

2. Dispositif selon la revendication 1, caractérisé en ce qu'il est disposé, sur 1 arbre du moteur (1), une roue dentée centrale (20) qui est en prise avec trois roues dentées (22, 23, 24) agissant à la manière de roues planétaires sur une couronne extérieure (21) à denture intérieure, la couronne extérieure (21) étant munie de trois chevilles radiales (25, 26, 27) qui sont maintenues chacune de manière élastique en position médiane dans le boîtier.

3. Dispositif selon la revendication 2, caractérisé en ce qu'un commutateur électrique (29) peut être commuté, par l'une des chevilles qui est prolongée et qui fait saillie sur le boîtier (3), pour actionner un électroaimant (12) qui commande la valve (13).

4. Dispositif pour l'amplification de la force d'entraînement d'un moteur de commande (1) dans une commande de positionnement linéaire comprenant une broche filetée (5) et un écrou de broche (30) qui est solidaire d'une bielle (9) réalisée sous forme de cylindre creux, ainsi qu'un dispositif de mesure, une valve (13) commandée au moyen de ce dispositif de mesure pour l'actionnement d'une commande hydraulique (34) et une transmission (31 - 33) entre la commande hydraulique (34) et la broche filetée (5), caractérisé en ce que le dispositif de mesure comprend des moyens pour la mesure du courant du moteur de commande et un commutateur de commande (10) à commutation à valeur seuil, en ce qu'un moteur hydraulique (34) séparé est utilisé comme commande hydraulique, et en ce qu'il est prévu des moyens d'entraînement mécaniques (31 - 33) pour la transmission de la force d'entraînement à la broche filetée (5).

5. Dispositif selon la revendication 4, caractérisé en ce que les moyens d'entraînement comprennent une première poulie (31) sur l'arbre du moteur hydraulique (34), une seconde poulie (32) sur la broche filetée (5) et une courroie dentée (33) passant sur ces deux poulies (31, 32).

6. Dispositif selon l'une quelconque des revendications 1 à 5, caractérisé en ce que le moteur de commande (1) est un moteur pas à pas.

# Fig. 1

# Fig. 2

# Fig. 3

# Fig. 4